# EUROPÄISCHE PATENTSCHRIFT

(11) **EP 4 323 731 B1**
(45) Veröffentlichungstag und Bekanntmachung des Hinweises auf die Patenterteilung: **06.08.2025**
(21) Anmeldenummer: 22711146.5
(22) Anmeldetag: 08.03.2022
(51) Int. Cl.: G01H 1/00, G01H 3/00

(54) **VERFAHREN UND SYSTEM ZUR ÜBERWACHUNG EINES VORRICHTUNGSZUSTANDS EINER VORRICHTUNG**
METHOD AND SYSTEM FOR MONITORING THE STATE OF A DEVICE
PROCÉDÉ ET SYSTÈME DE SURVEILLANCE DE L'ÉTAT D'UN DISPOSITIF

(30) Priorität: 13.04.2021 DE 102021109102
(43) Veröffentlichungstag der Anmeldung: 21.02.2024
(73) Patentinhaber: Schaeffler Technologies AG & Co. KG, 91074 Herzogenaurach (DE)
(72) Erfinder: REINERS, Harald, 52070 Aachen (DE); WEBBER, Oliver, 52070 Aachen (DE); SEPPÄ, Matti, 40520 Jyväskylä (FI)
(86) Internationale Anmeldenummer: PCT/DE2022/100181
(87) Internationale Veröffentlichungsnummer: WO 2022/218460

(56) Entgegenhaltungen:
- US-A1- 2010 030 492
- US-A1- 2018 354 088
- US-A1- 2019 203 729
- US-A1- 2020 149 993

## Beschreibung

Die Erfindung betrifft ein Verfahren zur Überwachung eines Vorrichtungszustands einer Vorrichtung, insbesondere einer Vorrichtung mit einer drehbaren Komponente, wobei ein Körperschallsignal der Vorrichtung gemessen wird. Ferner betrifft die Erfindung ein System zur Überwachung eines Vorrichtungszustands einer Vorrichtung, insbesondere einer Vorrichtung mit einer drehbaren Komponente, wobei das System einen Körperschallmesser umfasst, der zur Messung eines Körperschallsignals der Vorrichtung eingerichtet ist.

Eine vibrationsbasierte Überwachung von Vorrichtungszuständen eines Bauteils kann verwendet werden, um ungeplante Maschinenausfälle durch unerwartete bzw. nicht vorhergesehene Fehler zu erkennen und zu minimieren. Herkömmliche Systeme zur Überwachung eines Vorrichtungszustands brauchen dafür meist umfangreiches Fachwissen eines Experten bei der Installation und während des Betriebs. Die Kosten und der Aufwand für die Geräte, die Installation und den Betrieb sind typischerweise zu hoch, um eine breite Anwendung zu ermöglichen.

Bekannte Zustandsüberwachungssysteme beruhen in der Regel entweder auf einer maschinenspezifischen Konfiguration, die Expertenwissen und häufig lokale Anpassungen erfordert, um eine Überwachung des Maschinenzustands zu ermöglichen, oder sie nutzen nur die Vibrationssignalleistung, die nur sehr grundlegende Informationen zur Zustandsüberwachung liefert und mit der eine zuverlässige Überwachung eines Vorrichtungszustands einer Vorrichtung meist nicht möglich ist.

Die DE 10 2017 124 281 A1 beschreibt ein Verfahren zur Überwachung eines Betriebszustands einer Vorrichtung, insbesondere einer Vorrichtung mit einer drehenden Komponente, wobei ein Körperschallsignal der Vorrichtung gemessen wird und ein Spektrum (X) oder einer Huellkurve des Körperschallsignals ermittelt wird und zur Ermittlung eines Betriebszustands der Vorrichtung mindestens ein spektrales Audiomerkmal (M1, M2) des ermittelten Spektrums (X) bestimmt wird.

Die US 6 370 957 B1 beschreibt eine Methode zur Bestimmung des Betriebszustandes einer Rotationsmaschine, umfassend die Überwachung der Maschine unter einer Basisbetriebsbedingung und die Erfassung von Basisschwingungsdaten.

Die DE 199 45 058 A1 beschreibt ein Verfahren zur Bestimmung der Restlebensdauer der Schaltkontakte in einem elektrischen Schaltgerät, wobei durch den Schaltvorgang erzeugte Körperschallsignale der Schaltkontaktanordnung erfasst werden, diese sodann zur Erzeugung eines Sonogrammes in einzelnen Zeitfenstern einer Fouriertransformation unterworfen werden und gezielt einzelne Funktionswerte aus dem Sonogramm ermittelt und mittels einer Auswerteeinrichtung ausgewertet werden.

Die US 2010/0 030 492 A1 beschreibt ein Verfahren, umfassend das Empfangen eines Eingangssignals, das Informationen enthält, die mit einem Wälzlager und/oder einem das Wälzlager enthaltenden Ausrüstungsteil verknüpft sind. Das Verfahren umfasst außerdem das Zerlegen des Eingangssignals in ein Frequenzbereichssignal und das Bestimmen von mindestens einer Frequenzfamilie, die mindestens einer Ausfallart des Wälzlagers entspricht. Das Verfahren umfasst ferner das Erzeugen eines rekonstruierten Eingangssignals unter Verwendung der mindestens einen Frequenzfamilie und des Frequenzbereichssignals. Darüber hinaus umfasst das Verfahren das Bestimmen eines Indikators, der den Gesamtzustand des Wälzlagers identifiziert, unter Verwendung des rekonstruierten Eingangssignals. Der Indikator kann unter Verwendung eines Basissignals ermittelt werden, das entweder (i) dem normalen Betrieb des Wälzlagers und/oder des Ausrüstungsteils oder (ii) einem fehlerhaften Betrieb des Wälzlagers und/oder des Ausrüstungsteils (wobei sich der Schweregrad des fehlerhaften Betriebs mit der Zeit erhöht) zugeordnet ist.

Die US 2020/0 149 993 A1 beschreibt ein Maschinenlager, das auf einem drehbaren Element angeordnet ist, wie es beispielsweise an einem Fahrzeug vorhanden sein kann. Ein Verfahren zum Überwachen des Funktionszustands eines Maschinenlagers umfasst das Überwachen eines akustischen Signals über ein Mikrofon und das gleichzeitige Bestimmen einer Drehzahl des mit dem Maschinenlager verbundenen drehbaren Elements. Das Klangspektrum wird mit der Rotationsgeschwindigkeit des rotierenden Elements korreliert und es wird eine Zeit-Frequenz-Analyse ausgeführt, um ein Klangspektrum zu bestimmen. Das Schallspektrum wird in ein Restspektrum umgewandelt. Aus dem Restspektrum werden ein erstes Merkmal, das einem ersten Frequenzband zugeordnet ist, und ein zweites Merkmal, das einem zweiten Frequenzband zugeordnet ist, extrahiert. Der Gesundheitszustand des Maschinenlagers wird anhand der ersten und zweiten Merkmale erkannt und an eine zweite Steuerung übermittelt.

Die US 2018/0 354 088 A1 beschreibt eine Werkzeugmaschine, die so konfiguriert ist, dass ein erstes Frequenzband, das die charakteristische Schwingungsfrequenz der Hauptwelle umfasst, und ein zweites Frequenzband, das die charakteristische Schwingungsfrequenz der mechanischen Struktur umfasst, eingestellt werden; Schwellenwerte für jedes der eingestellten Frequenzbänder gespeichert werden; Schwingungskomponenten für jedes der Frequenzbänder aus der Ausgabe eines Schwingungssensors extrahiert werden; und ein Alarm ausgelöst wird, wenn die Schwingungsamplitude einen Schwellenwert in einem der Frequenzbänder überschreitet.

Die US 2019/0 203 729 A1 beschreibt eine Pumpvorrichtung, die das Auftreten einer anormalen Vibration genauer feststellen kann. Die Pumpvorrichtung umfasst: eine Pumpe; einen Elektromotor zum Antreiben der Pumpe; einen Wechselrichter als Drehzahländerungsmittel für den Elektromotor; einen Vibrationsdetektor zum Erkennen von mindestens einer Vibration der Pumpe, einer Vibration des Elektromotors und einer Vibration des Wechselrichters; und eine Steuereinheit zum Steuern der Pumpe. Der Controller umfasst eine Speichereinheit zum Speichern eines vom Vibrationsdetektor gemessenen Vibrationswerts. Die Speichereinheit verfügt über eine Speichertabelle, die bei schrittweiser Erhöhung der Drehzahl der Pumpe auf eine vorgegebene Drehzahl die bei jedem Schritt gemessenen Schwingungsmesswerte speichert.

Es ist eine Aufgabe der vorliegenden Erfindung, ein zuverlässiges und/oder kostengünstiges Verfahren zur Überwachung eines Vorrichtungszustands einer Vorrichtung bereitzustellen, welches vorzugsweise eine unkomplizierte Installation und/oder Bedienbarkeit des Überwachungssystems ermöglicht. Ferner ist es eine Aufgabe ein entsprechendes System bereitzustellen.

Die Aufgabe wird erfindungsgemäß gelöst durch ein Verfahren mit den Merkmalen des Patentanspruchs 1.

Erfindungsgemäß kann hierdurch eine kosteneffiziente und zuverlässige Zustandsüberwachung erreicht werden, die gleichzeitig besonders vorteilhaft automatisiert ist, sodass die Anforderungen an das Fachwissen des Nutzers des Überwachungssystems geringgehalten werden können. Hierdurch ergibt sich die Möglichkeit, eine verbesserte Zustandsüberwachung auf eine Vielzahl von Vorrichtungen und Maschinen anzuwenden, bei denen aus dem Stand der Technik bekannte Systeme und Verfahren zu aufwändig und nicht wirtschaftlich wären. Erfindungsgemäß ist es besonders vorteilhaft möglich, dass Fehler bzw. Defekte an der Vorrichtung detektiert und beurteilt werden können, ohne dass eine durch einen Nutzer vorgenommene Konfiguration vorgenommen werden muss.

Mechanische Defekte an Vorrichtungen mit rotierenden Komponenten können durch die Überwachung der Maschinenschwingungen erkannt werden. Anfänglich zeigen sich Defekte typischerweise entweder in einem unteren oder einem oberen Frequenzband. Mit zunehmender Fehlerschwere nimmt die aus dem Fehler resultierende Anregung in der Amplitude zu und kann sich auch über weitere Frequenzbereiche ausbreiten.

Bevorzugt wird der Vorrichtungszustand der Vorrichtung zumindest in Abhängigkeit des ersten Zeitbereichs-Merkmals-Zustands und des zweiten Zeitbereichs-Merkmals-Zustands bestimmt und/oder überprüft.

Es ist erfindungsgemäß denkbar, dass das Verfahren ein computerimplementiertes Verfahren ist. Insbesondere werden ein, mehrere oder alle Schritte des Verfahrens durch einen Computer, insbesondere automatisiert, ausgeführt.

Der erfindungsgemäß bestimmte und/oder überprüfte Vorrichtungszustand gibt insbesondere an, ob die Vorrichtung normal bzw. fehlerfrei funktioniert oder ob ein Fehler und/oder ein Hinweis auf einen Fehler vorliegt.

Es ist vorzugsweise möglich, dass in Abhängigkeit des bestimmten Vorrichtungszustands der Vorrichtung eine automatische Alarmierung stattfinden kann. Somit kann ein besonders vorteilhaftes schwingungsbasiertes bzw. vibrationsbasiertes Zustandsüberwachungssystem mit automatischen Alarmierungsmethoden erreicht werden.

Die drehbare Komponente ist insbesondere eine sich im Betrieb der Vorrichtung drehende Komponente. Eine solche sich drehende Komponente führt typischerweise zu einem messbaren Körperschallsignal. Mithilfe der vorliegenden Erfindung können beispielsweise Fehlerzustände in Wälzlagern oder Verzahnungen bereits in einem Frühstadium erkannt werden. Es vorteilhafterweise möglich, dass dadurch die rechtzeitige Planung von Instandhaltungsmaßnahmen ermöglicht und die Wahrscheinlichkeit des Auftretens ungeplanter Stillstandzeiten verringert wird.

Erfindungsgemäß ist es beispielsweise möglich, dass eine Audiomerkmal-basierte Anomalie-Erkennung verwendet wird, die auf einen veränderten Klang bzw. eine veränderte Klangfarbe bzw. eine Veränderung des Körperschallsignals der Vorrichtung reagiert, und ferner eine frequenzabhängige Auswertung des Körperschallsignals, beispielsweise der Energie des Körperschallsignals, verwendet wird, um die Fehlerschwere zu beurteilen.

Vorteilhafte Weiterbildungen und Ausgestaltungen können den abhängigen Ansprüchen entnommen werden.

Gemäß einer Ausführungsform der vorliegenden Erfindung ist es denkbar, dass im Betrieb der Vorrichtung
-- ein oder mehrere weitere erste Zeitbereichs-Merkmale für das erste Frequenzband des Körperschallsignals ermittelt werden und/oder
-- ein oder mehrere weitere zweite Zeitbereichs-Merkmale für das zweite Frequenzband des Körperschallsignals ermittelt werden,
   --- wobei das oder die im Betrieb der Vorrichtung ermittelten weiteren ersten Zeitbereichs-Merkmale jeweils mit einem oberen und/oder einem unteren weiteren ersten Schwellenwert verglichen werden, sodass ein oder mehrere weitere erste Zeitbereichs-Merkmals-Zustände bestimmt werden, und/oder
   --- wobei das oder die im Betrieb der Vorrichtung ermittelten weiteren zweiten Zeitbereichs-Merkmale jeweils mit einem oberen und/oder einem unteren weiteren zweiten Schwellenwert verglichen werden, sodass ein oder mehrere weitere zweite Zeitbereichs-Merkmals-Zustände bestimmt werden,
wobei der Vorrichtungszustand der Vorrichtung zusätzlich in Abhängigkeit des oder der weiteren ersten Zeitbereichs-Merkmals-Zustände und/oder des oder der weiteren zweiten Zeitbereichs-Merkmals-Zustände bestimmt und/oder überprüft wird. Hierdurch ist es besonders vorteilhaft möglich, mehrere erste Zeitbereichs-Merkmale für das erste Frequenzband des Körperschallsignals und/oder mehrere zweite Zeitbereichs-Merkmale für das zweite Frequenzband des Körperschallsignals zur Zustandsüberwachung zu verwenden, wodurch eine besonders hohe Zuverlässigkeit erzielt werden kann.

Gemäß einer Ausführungsform der vorliegenden Erfindung ist es denkbar, dass in einer Trainingsphase, in welcher sich die Vorrichtung insbesondere in einem vorgegebenen Gut-Zustand und/oder Normalbetrieb befindet, das erste Zeitbereichs-Merkmal des ersten Frequenzbands des Körperschallsignals der Vorrichtung und das zweite Zeitbereichs-Merkmal des zweiten Frequenzbands des Körperschallsignals der Vorrichtung bestimmt werden,
wobei mithilfe des in der Trainingsphase bestimmten ersten Zeitbereichs-Merkmals des ersten Frequenzbands der obere und/oder der untere erste Schwellenwert betreffend das erste Zeitbereichs-Merkmal bestimmt und insbesondere gespeichert werden,
wobei mithilfe des in der Trainingsphase bestimmten zweiten Zeitbereichs-Merkmals des zweiten Frequenzbands der obere und/oder der untere zweite Schwellenwert betreffend das zweite Zeitbereichs-Merkmal bestimmt und insbesondere gespeichert werden. Besonders vorteilhaft ist es möglich, dass die Trainingsphase automatisiert durchgeführt wird,
insbesondere vor der Zustandsüberwachung im Betrieb der Vorrichtung. Hierdurch können die Schwellenwerte automatisch und somit besonders komfortabel bestimmt werden, sodass die Nutzerfreundlichkeit erhöht und die Fehleranfälligkeit reduziert werden kann. Das Speichern der Schwellenwerte kann beispielsweise in einem Speicher eines Computers erfolgen.

Gemäß einer Ausführungsform der vorliegenden Erfindung ist es denkbar, dass in der Trainingsphase ein oder mehrere weitere erste Zeitbereichs-Merkmale des ersten Frequenzbands des Körperschallsignals der Vorrichtung und/oder ein oder mehrere weitere zweite Zeitbereichs-Merkmale des zweiten Frequenzbands des Körperschallsignals der Vorrichtung bestimmt werden,
wobei mithilfe des oder der in der Trainingsphase bestimmten weiteren ersten Zeitbereichs-Merkmale jeweils ein oberer und/oder jeweils ein unterer weiterer erster Schwellenwert, insbesondere für jedes der ersten Zeitbereichs-Merkmale, bestimmt und insbesondere gespeichert werden,
wobei mithilfe des oder der in der Trainingsphase bestimmten weiteren zweiten Zeitbereichs-Merkmale jeweils ein oberer und/oder jeweils ein unterer weiterer zweiter Schwellenwert, insbesondere für jedes der zweiten Zeitbereichs-Merkmale, bestimmt und insbesondere gespeichert werden. Somit können in der Trainingsphase auch für weitere Zeitbereichs-Merkmale jeweils Schwellenwerte bestimmt werden, die dann im Betrieb der Vorrichtung während der Überwachung des Vorrichtungszustands der Vorrichtung verwendet werden können.

Gemäß einer Ausführungsform der vorliegenden Erfindung ist es denkbar, dass das erste Zeitbereichs-Merkmal eines der folgenden Merkmale des Körperschallsignals betreffend das erste Frequenzband ist:
-- mittlere quadratische Abweichung und/oder Standardabweichung,
-- Kurtosis,
-- Energie,
wobei insbesondere das oder die weiteren ersten Zeitbereichs-Merkmale, jeweils eines der folgenden Merkmale des Körperschallsignals betreffend das erste Frequenzband sind:
-- mittlere quadratische Abweichung und/oder Standardabweichung,
-- Kurtosis,
-- Energie.

Auch weitere speziell zur Überwachung von Vorrichtungszuständen vorgesehene Zeitbereichs-Merkmale sind denkbar. Das erste Zeitbereichs-Merkmal und das oder die weiteren ersten Zeitbereichs-Merkmale sind vorzugsweise voneinander verschiedene Merkmale.

Gemäß einer Ausführungsform der vorliegenden Erfindung ist es denkbar, dass das zweite Zeitbereichs-Merkmal eines der folgenden Merkmale des Körperschallsignals betreffend das zweite Frequenzband ist:
-- mittlere quadratische Abweichung und/oder Standardabweichung,
-- Kurtosis,
-- Energie,
wobei insbesondere das oder die weiteren zweiten Zeitbereichs-Merkmale jeweils eines der folgenden Merkmale des Körperschallsignals betreffend das zweite Frequenzband sind:
-- mittlere quadratische Abweichung und/oder Standardabweichung,
-- Kurtosis,
-- Energie.

Auch weitere speziell zur Überwachung von Vorrichtungszuständen vorgesehene Zeitbereichs-Merkmale sind denkbar. Das zweite Zeitbereichs-Merkmal und das oder die weiteren zweiten Zeitbereichs-Merkmale sind vorzugsweise voneinander verschiedene Merkmale.

Gemäß einer Ausführungsform der vorliegenden Erfindung ist es denkbar, dass das Körperschallsignal ein Zeitbereichs-Signal ist, wobei das Körperschallsignal insbesondere eines oder mehrere der folgenden Signale umfasst:
-- Vibrations-Beschleunigungssignal,
-- Vibrations-Geschwindigkeitssignal,
-- Vibrations-Auslenkungssignal. Hierdurch ist es möglich, dass für das Verfahren vorteilhafte Körperschallsignale verwendet werden, die mithilfe eines Körperschallmessers an der Vorrichtung ermittelt werden.

Gemäß einer Ausführungsform der vorliegenden Erfindung ist es denkbar, dass das erste Frequenzband ein unteres Frequenzband des Körperschallsignals ist und wobei das zweite Frequenzband ein oberes Frequenzband des Körperschallsignals ist. Insbesondere liegt das untere Frequenzband unter dem oberen Frequenzband. Es ist denkbar, dass das untere und das obere Frequenzband voneinander beabstandet sind. Es ist alternativ denkbar, dass das untere und das obere Frequenzband aneinander angrenzen.

Es ist gemäß einer Ausführungsform der vorliegenden Erfindung möglich, dass das untere Frequenzband einen Frequenzbereich von 0 Hz bis 750 Hz umfasst und/oder dass das obere Frequenzband einen Frequenzbereich von 750 Hz bis 3000 Hz, vorzugsweise bis 5000 Hz, umfasst. Es ist insbesondere denkbar, dass sich das untere Frequenzband von 0 Hz bis 750 Hz erstreckt und/oder dass sich das obere Frequenzband von 750 Hz bis 3000 Hz, vorzugsweise von 750 Hz bis 5000 Hz, erstreckt. Auch andere Werte für die Frequenzbänder sind denkbar. Es ist denkbar, dass für die konkrete Wahl der Frequenzbänder technische Eigenschaften der Vorrichtung und/oder Erfahrungswerte betreffend die Vorrichtung und/oder technische Restriktionen berücksichtigt werden. Es ist denkbar, dass das untere Frequenzband und/oder das obere Frequenzband fest vorgegeben sind. Alternativ wäre es möglich, dass das untere Frequenzband und/oder das obere Frequenzband variierbar sind.

Erfindungsgemäß ist vorgesehen, dass der erste Zeitbereichs-Merkmals-Zustand einer von mindestens drei Kategorien zuordenbar ist, insbesondere einer der folgenden Kategorien:
-- "normal",
-- "erhöht",
-- "hoch",

- wobei der ermittelte erste Zeitbereichs-Merkmals-Zustand "normal" ist, wenn das im Betrieb der Vorrichtung ermittelte erste Zeitbereichs-Merkmal des ersten Frequenzbands unterhalb des unteren und unterhalb des oberen ersten Schwellenwerts liegt,
- wobei der ermittelte erste Zeitbereichs-Merkmals-Zustand "erhöht" ist, wenn das im Betrieb der Vorrichtung ermittelte erste Zeitbereichs-Merkmal des ersten Frequenzbands oberhalb des unteren ersten Schwellenwerts und unterhalb des oberen ersten Schwellenwerts liegt,
- wobei der ermittelte erste Zeitbereichs-Merkmals-Zustand "hoch" ist, wenn das im Betrieb der Vorrichtung ermittelte erste Zeitbereichs-Merkmal des ersten Frequenzbands oberhalb des unteren ersten Schwellenwerts und oberhalb des oberen ersten Schwellenwerts liegt,
   und/oder wobei der zweite Zeitbereichs-Merkmals-Zustand einer von mindestens drei Kategorien zuordenbar ist, insbesondere einer der folgenden Kategorien:
   -- "normal",
   -- "erhöht",
   -- "hoch",
- wobei der ermittelte zweite Zeitbereichs-Merkmals-Zustand "normal" ist, wenn das im Betrieb der Vorrichtung ermittelte zweite Zeitbereichs-Merkmal des zweiten Frequenzbands unterhalb des unteren und unterhalb des oberen zweiten Schwellenwerts liegt,
- wobei der ermittelte zweite Zeitbereichs-Merkmals-Zustand "erhöht" ist, wenn das im Betrieb der Vorrichtung ermittelte zweite Zeitbereichs-Merkmal des zweiten Frequenzbands oberhalb des unteren zweiten Schwellenwerts und unterhalb des oberen zweiten Schwellenwerts liegt,
- wobei der ermittelte zweite Zeitbereichs-Merkmals-Zustand "hoch" ist, wenn das im Betrieb der Vorrichtung ermittelte zweite Zeitbereichs-Merkmal des zweiten Frequenzbands oberhalb des unteren zweiten Schwellenwerts und oberhalb des oberen zweiten Schwellenwerts liegt. Die Benennung der Kategorien als "normal", "erhöht" und "hoch" ist insbesondere lediglich als Ausführungsbeispiel und nicht als Beschränkung zu verstehen. Es sind erfindungsgemäß auch beliebige andere Benennungen für die Kategorien denkbar.

Dementsprechend ist es gemäß einer Ausführungsform der vorliegenden Erfindung, bei der ein oder mehrere weitere erste Zeitbereichs-Merkmale verwendet werden, möglich, dass der oder die weiteren ersten Zeitbereichs-Merkmals-Zustände jeweils einer von mindestens drei Kategorien zuordenbar sind, insbesondere einer der folgenden Kategorien:
-- "normal",
-- "erhöht",
-- "hoch",

- wobei ein ermittelter weiterer erster Zeitbereichs-Merkmals-Zustand "normal" ist, wenn das entsprechende im Betrieb der Vorrichtung ermittelte weitere erste Zeitbereichs-Merkmal des ersten Frequenzbands unterhalb des entsprechenden unteren weiteren ersten Schwellenwerts und unterhalb des entsprechenden oberen weiteren ersten Schwellenwerts liegt,
- wobei ein ermittelter weiterer erster Zeitbereichs-Merkmals-Zustand "erhöht" ist, wenn das entsprechende im Betrieb der Vorrichtung ermittelte weitere erste Zeitbereichs-Merkmal des ersten Frequenzbands oberhalb des entsprechenden unteren weiteren ersten Schwellenwerts und unterhalb des entsprechenden oberen weiteren ersten Schwellenwerts liegt,
- wobei ein ermittelter weiterer erster Zeitbereichs-Merkmals-Zustand "hoch" ist, wenn das entsprechende im Betrieb der Vorrichtung ermittelte weitere erste Zeitbereichs-Merkmal des ersten Frequenzbands oberhalb des entsprechenden unteren weiteren ersten Schwellenwerts und oberhalb des entsprechenden oberen weiteren ersten Schwellenwerts liegt.

Dementsprechend ist es gemäß einer Ausführungsform der vorliegenden Erfindung, bei der ein oder mehrere weitere zweite Zeitbereichs-Merkmale verwendet werden, möglich, dass der oder die weiteren zweiten Zeitbereichs-Merkmals-Zustände jeweils einer von mindestens drei Kategorien zuordenbar sind, insbesondere einer der folgenden Kategorien:
-- "normal",
-- "erhöht",
-- "hoch",

- wobei ein ermittelter weiterer zweiter Zeitbereichs-Merkmals-Zustand "normal" ist, wenn das entsprechende im Betrieb der Vorrichtung ermittelte weitere zweite Zeitbereichs-Merkmal des zweiten Frequenzbands unterhalb des entsprechenden unteren weiteren zweiten Schwellenwerts und unterhalb des entsprechenden oberen weiteren zweiten Schwellenwerts liegt,
- wobei ein ermittelter weiterer zweiter Zeitbereichs-Merkmals-Zustand "erhöht" ist, wenn das entsprechende im Betrieb der Vorrichtung ermittelte weitere zweite Zeitbereichs-Merkmal des zweiten Frequenzbands oberhalb des entsprechenden unteren weiteren zweiten Schwellenwerts und unterhalb des entsprechenden oberen weiteren zweiten Schwellenwerts liegt,
- wobei ein ermittelter weiterer zweiter Zeitbereichs-Merkmals-Zustand "hoch" ist, wenn das entsprechende im Betrieb der Vorrichtung ermittelte weitere zweite Zeitbereichs-Merkmal des zweiten Frequenzbands oberhalb des entsprechenden unteren weiteren zweiten Schwellenwerts und oberhalb des entsprechenden oberen weiteren zweiten Schwellenwerts liegt.

Gemäß einer Ausführungsform der vorliegenden Erfindung ist es denkbar, dass der ermittelte Vorrichtungszustand der Vorrichtung einer von mindestens vier Kategorien zuordenbar ist, wobei die Kategorien insbesondere die folgenden Zustandskategorien umfassen:
-- o.k. und/oder normal,
-- Verdacht auf Fehler und/oder vermuteter Fehler,
-- Warnung,
-- erhebliche Warnung und/oder Gefahr.

Die Benennung der Kategorien für den Vorrichtungszustand der Vorrichtung ist lediglich als Ausführungsbeispiel und nicht als Beschränkung zu verstehen. Es sind erfindungsgemäß auch beliebige andere Benennungen für die Kategorien denkbar.

Gemäß einer Ausführungsform der vorliegenden Erfindung ist es denkbar, dass der ermittelte Vorrichtungszustand der Vorrichtung aus den einzelnen betrachteten Zeitbereichs-Merkmals-Zuständen derart ermittelt wird, dass:
-- (i) wenn mindestens einer der betrachteten Zeitbereichs-Merkmals-Zustände "erhöht" ist, der ermittelte Vorrichtungszustand der Vorrichtung "Verdacht auf Fehler" und/oder "vermuteter Fehler" ist;
-- (ii) wenn mindestens einer der betrachteten Zeitbereichs-Merkmals-Zustände "hoch" ist, der ermittelte Vorrichtungszustand der Vorrichtung "Warnung" ist;
-- (iii) wenn mindestens einer der betrachteten ersten und/oder weiteren ersten Zeitbereichs-Merkmals-Zustände des ersten Frequenzbands "erhöht" ist und mindestens einer der betrachteten zweiten und/oder weiteren zweiten Zeitbereichs-Merkmals-Zustände des zweiten Frequenzbands "erhöht" ist, der ermittelte Vorrichtungszustand der Vorrichtung "Warnung" ist;
-- (iv) wenn mindestens einer der betrachteten ersten und/oder weiteren ersten Zeitbereichs-Merkmals-Zustände des ersten Frequenzbands "hoch" ist und mindestens einer der betrachteten zweiten und/oder weiteren zweiten Zeitbereichs-Merkmals-Zustände des zweiten Frequenzbands "hoch" ist, der ermittelte Vorrichtungszustand der Vorrichtung "erhebliche Warnung" und/oder "Gefahr" ist;
-- (v) wenn alle betrachteten Zeitbereichs-Merkmals-Zustände "normal" sind und/oder keine der vorhergehenden Bedingungen (i) bis (iv) erfüllt ist, der ermittelte Vorrichtungszustand der Vorrichtung "o.k." und/oder "normal" ist;
-- (vi) wenn mehrere der vorhergehenden Bedingungen (i) bis (v) gleichzeitig erfüllt sind, der ermittelte Vorrichtungszustand der Vorrichtung der Vorrichtungszustand mit der höchsten Warnstufe ist, die sich aus den einzelnen Bedingungen (i) bis (v) ergibt.

Gemäß einer Ausführungsform der vorliegenden Erfindung ist es denkbar, dass eine Ausführungsform der vorliegenden Erfindung, insbesondere eine vorgehend beschriebene Ausführungsform der vorliegenden Erfindung, mit einer zusätzlichen Audio-Merkmal basierten Anomalie-Detektion kombinierbar ist, beispielsweise einer Detektion gemäß der DE 102017 124 281 A1. Es ist denkbar, dass wenn eine Anomalie gemäß einem Verfahren der DE 10 2017 124 281 A1 detektiert wird, der Vorrichtungszustand der Vorrichtung mindestens der Kategorie "Verdacht auf Fehler" und/oder "vermuteter Fehler" zugeordnet wird (oder gar der Kategorie "Warnung" oder "erhebliche Warnung und/oder Gefahr").

Gemäß der vorliegenden Erfindung erfolgt eine Betrachtung und/oder Auswertung einer Temperatur der Vorrichtung. Hierfür ist ein Temperaturmesser vorhanden, der zur Messung einer Temperatur der Vorrichtung eingerichtet ist. Wenn die gemessene Temperatur der Vorrichtung "erhöht" ist (insbesondere oberhalb eines ersten Temperaturschwellenwertes liegt), wird der Vorrichtungszustand der Vorrichtung mindestens der Kategorie "Verdacht auf Fehler" und/oder "vermuteter Fehler" zugeordnet. Wenn die gemessene Temperatur der Vorrichtung "hoch" ist (insbesondere oberhalb eines zweiten Temperaturschwellenwertes liegt, der größer ist als der erste Temperaturschwellenwert), wird der Vorrichtungszustand der Vorrichtung mindestens der Kategorie "Warnung" zugeordnet.

Gemäß einer Ausführungsform der vorliegenden Erfindung ist es denkbar, dass eine Ausführungsform der vorliegenden Erfindung, insbesondere eine vorgehend beschriebene Ausführungsform der vorliegenden Erfindung, mit einem Standard-Vibrationssignal-Merkmal kombiniert wird, für das bekannte Schwellenwerte existieren. Hierbei kann es sich beispielsweise um einen Geschwindigkeit-quadratisches Mittel-Wert (velocity-rms (root means square)-value) handeln, wie in ISO 20816 definiert. Durch Anwendung eines derartigen standardisierten absoluten Schwellenwertes können mögliche Schwierigkeiten bei der Bestimmung der unteren und oberen (ersten und zweiten) Schwellenwerte für das erste Zeitbereichs-Merkmal/zweite Zeitbereichs-Merkmal/weitere erste Zeitbereichs-Merkmal/weitere zweite Zeitbereichs-Merkmal usw. (in der Trainingsphase, falls sich die Vorrichtung dabei nicht in einem normalen Zustand (Gut-Zustand) befindet) besonders vorteilhaft verringert werden.

Gemäß einer Ausführungsform der vorliegenden Erfindung ist es denkbar, dass eine Ausführungsform der vorliegenden Erfindung, insbesondere eine vorgehend beschriebene Ausführungsform der vorliegenden Erfindung, mit Regeln zur Ermittlung des Typs bzw. der Art eines Defekts bzw. Fehlers kombiniert wird. Falls beispielsweise der ermittelte Vorrichtungszustand der Vorrichtung die Kategorie "Warnung" oder "erhebliche Warnung" und/oder "Gefahr" hat, ist es denkbar, dass die wahrscheinliche Art des Fehlers aus den individuellen ermittelten Zeitbereichs-Merkmals-Zuständen (erster Zeitbereichs-Merkmals-Zustand, zweiter Zeitbereichs-Merkmals-Zustand, usw.) ermittelt wird. Hierfür ist es möglich, weitere Zusatzinformationen, beispielsweise den Analagentyp, bei der Bestimmung des Typs des Fehlers zu verwenden bzw. zu berücksichtigen.

Es ist gemäß einer Ausführungsform der vorliegenden Erfindung möglich, dass in Abhängigkeit des ermittelten Vorrichtungszustands, insbesondere im Falle eines ermittelten Verdachts auf einen Fehler, einer Warnung und/oder einer ehrblichen Warnung, automatisiert eine Benachrichtigung an einen Nutzer erfolgt, sodass dieser Gegenmaßnahmen einleiten kann. Es ist alternativ oder zusätzlich denkbar, dass in Abhängigkeit des ermittelten Vorrichtungszustands, insbesondere im Falle eines ermittelten Verdachts auf einen Fehler, einer Warnung und/oder einer ehrblichen Warnung, automatisiert Gegenmaßnahmen eingeleitet werden, beispielsweise ein Abschalten der Vorrichtung. Auch weitere Gegenmaßnahmen sind alternativ oder zusätzlich denkbar.

Ein weiterer Gegenstand der vorliegenden Erfindung ist ein System zur Überwachung eines Vorrichtungszustands einer Vorrichtung mit den Merkmalen des Patentanspruchs 11.

Das System umfasst insbesondere Schaltungsmittel bzw. einen Computer, der derart eingerichtet ist, dass die Schritte eines Verfahrens gemäß einer Ausführungsform der vorliegenden Erfindung ausgeführt werden, bevorzugt automatisiert. Für das erfindungsgemäße System können dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind.

Weitere Einzelheiten und Vorteile der Erfindung sollen nachfolgend anhand der in den Zeichnungen dargestellten Ausführungsbeispiele erläutert werden. Hierin zeigt:
- Fig. 1: eine schematische Darstellung eines Verfahrens gemäß einer Ausführungsform der vorliegenden Erfindung.
- Fig. 2: eine schematische Darstellung eines Systems gemäß einer Ausführungsform der vorliegenden Erfindung.

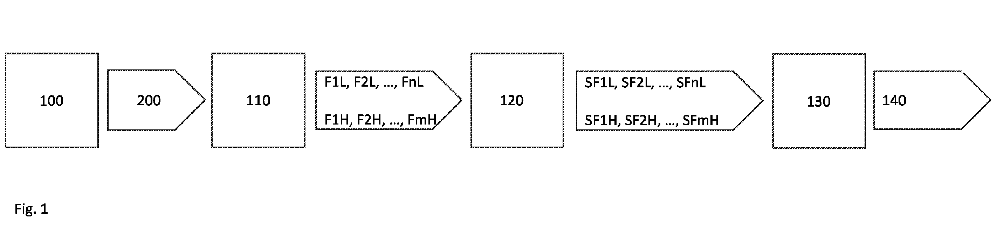

In Fig. 1 ist eine schematische Darstellung eines Verfahrens gemäß einer Ausführungsform der vorliegenden Erfindung gezeigt.

Mithilfe eines Körperschallmessers 2 findet im Betrieb der Vorrichtung 1 eine Datenaufnahme 100 statt, bei der ein Körperschallsignal 200 (bzw. Vibrationssignal) betreffend eine Vorrichtung 1 ermittelt wird.

In einer Merkmalsextraktion 110 werden mindestens ein erstes Zeitbereichs-Merkmal F1L und vorzugsweise ein oder mehrere weitere erste Zeitbereichs-Merkmale F2L, ..., FnL für ein erstes Frequenzband des Körperschallsignals 200 ermittelt. "F1L, ..., FnL" bezeichnen hierbei insgesamt "n" erste Zeitbereichs-Merkmale, wobei "n" eine natürliche Zahl ist ("n" kann beispielsweise 2, 3, 4, 5, 6, 7, usw. sein). Ferner werden in der Merkmalsextraktion 110 mindestens ein zweites Zeitbereichs-Merkmal F1H und vorzugsweise ein oder mehrere weitere zweite Zeitbereichs-Merkmale F2H, ..., FmH für ein zweites Frequenzband des Körperschallsignals 200 ermittelt. "F1H, ..., FmH" bezeichnen hierbei insgesamt "m" zweite Zeitbereichs-Merkmale, wobei "m" eine natürliche Zahl ist ("m" kann beispielsweise 2, 3, 4, 5, 6, 7, usw. sein).

In einer Merkmalszustandsbewertung 120 werden die ermittelten ersten Zeitbereichs-Merkmale F1L, ..., FnL des ersten Frequenzbands jeweils mit einem oberen und einem unteren ersten Schwellenwert verglichen. Durch diesen Vergleich wird für jedes der betrachteten ersten Zeitbereichs-Merkmale F1L, ..., FnL ein entsprechender eigener erster Zeitbereichs-Merkmals-Zustand SF1L, ..., SFnL bestimmt.

Ferner werden in der Merkmalszustandsbewertung 120 die ermittelten zweiten Zeitbereichs-Merkmale F1H, ..., FmH des zweiten Frequenzbands jeweils mit einem oberen und einem unteren zweiten Schwellenwert verglichen. Durch diesen Vergleich wird für jedes der betrachteten zweiten Zeitbereichs-Merkmale F1H, ..., FmH ein entsprechender zweiter Zeitbereichs-Merkmals-Zustand SF1H, ..., SFmH bestimmt.

In einer Vorrichtungszustandsbewertung 130 wird aus den ermittelten Zeitbereichs-Merkmals-Zuständen SF1L, ..., SFnL, SF1H, ..., SFmH dann der Vorrichtungszustand 140 der Vorrichtung 1 bestimmt.

Gemäß einer Ausführungsform der vorliegenden Erfindung kann ein erfindungsgemäßes Verfahren die folgenden Schritte umfassen.

Es werden zwei Sätze von jeweils einem oder mehreren Zeitbereichs-Merkmalen F1L, ..., FnL und F1H, ..., FmH für ein unteres und ein oberes Frequenzband eines Zeitbereichs-Vibrationssignals (bzw. Körperschallsignals 200) definiert, die zur Ermittlung eines Vorrichtungszustands 140 einer Vorrichtung 1 verwendet werden. Die Zeitbereichs-Merkmale F1L, ..., FnL und F1H, ..., FmH können beispielsweise eine Standardabweichung, eine Kurtosis oder andere Merkmale umfassen, die speziell für vibrationsbasierte Zustandsüberwachungssysteme entwickelt sind. Bei dem Zeitbereichs-Vibrationssignal (bzw. Körperschallsignal 200) kann es sich beispielsweise um ein Beschleunigungssignal oder ein Geschwindigkeitssignal handeln, das beispielsweise mithilfe eines Körperschallmessers 2 an der Vorrichtung 1 ermittelt wird.

Ausgangswerte (baseline values) für die betrachteten Zeitbereichs-Merkmale werden vorzugsweise in einer initialen Trainingsphase, während der sich die Vorrichtung 1 in einem angenommenen Gut-Zustand und im Betrieb befindet, ermittelt. Aus diesen Ausgangswerten werden für jedes der betrachteten Zeitbereichs-Merkmale F1L, ..., FnL und F1H, ..., FmH (und insbesondere pro Frequenzband) jeweils ein oberer und ein unterer Schwellenwert bestimmt.

Durch Überwachung der betrachteten Zeitbereichs-Merkmale F1L, ..., FnL und F1H, ..., FmH im weiteren Betrieb der Vorrichtung 1, insbesondere nachdem die Trainingsphase abgeschlossen wurde, kann für jedes der betrachteten Zeitbereichs-Merkmale F1L, ..., FnL und F1H, ..., FmH ein Zeitbereichs-Merkmals-Zustand SF1L, ..., SFnL und SF1H, ..., SFmH ermittelt werden:
"normal" - der Wert des gemessenen Zeitbereichs-Merkmals F1L, ..., FnL und F1H, ..., FmH ist unterhalb des unteren und unterhalb des oberen Schwellenwerts;
"erhöht" - der Wert des gemessenen Zeitbereichs-Merkmals F1L, ..., FnL und F1H, ..., FmH ist zwischen dem unteren und dem oberen Schwellenwert;
"hoch" - der Wert des gemessenen Zeitbereichs-Merkmals F1L, ..., FnL und F1H, ..., FmH ist sowohl oberhalb des unteren als auch oberhalb des oberen Schwellenwerts.
Um die Einflüsse von zufälligen Ausreißern und/oder von Rauschen bei der Ermittlung der Zeitbereichs-Merkmale F1L, ..., FnL und F1H, ..., FmH während des Betriebs der Vorrichtung 1 zu minimieren, können statistische Auswertungsmethoden angewandt werden. Hierbei kommen eine Vielzahl von Auswertungsmethoden infrage.

Der Vorrichtungszustand 140 der Vorrichtung 1 wird aus den einzelnen ermittelten Zeitbereichs-Merkmals-Zuständen SF1L, ..., SFnL und SF1H, ..., SFmH der betrachteten Zeitbereichs-Merkmale F1L, ..., FnL und F1H, ..., FmH erhalten, insbesondere in Einklang mit dem (vorhergehend bereits beschriebenen) Verhalten der Entwicklung bezüglich Amplitude und Frequenzbereich der Anregungen:
Anfänglich zeigen sich Defekte typischerweise entweder in einem unteren oder einem oberen Frequenzband. Mit zunehmender Fehlerschwere nimmt die aus dem Fehler resultierende Anregung in der Amplitude zu und kann sich auch über weitere Frequenzbereiche ausbreiten.

Der ermittelte Vorrichtungszustand 140 der Vorrichtung 1 kann beispielsweise mithilfe der folgenden Kategorien bzw. Klassen angegeben werden:
-- "o.k." und/oder "normal",
-- "Verdacht auf Fehler" und/oder "vermuteter Fehler",
-- "Warnung",
-- "erhebliche Warnung" und/oder "Gefahr".

Gemäß einem Ausführungsbeispiel wird der ermittelte Vorrichtungszustand 140 der Vorrichtung 1 aus den einzelnen betrachteten Zeitbereichs-Merkmals-Zuständen SF1L, ..., SFnL, SF1H, ..., SFmH wie folgt erhalten:
-- Wenn mindestens einer der betrachteten Zeitbereichs-Merkmals-Zustände "erhöht" ist, ist der ermittelte Vorrichtungszustand 140 der Vorrichtung 1 "Verdacht auf Fehler" und/oder "vermuteter Fehler".
-- Wenn mindestens einer der betrachteten Zeitbereichs-Merkmals-Zustände "hoch" ist, ist der ermittelte Vorrichtungszustand 140 der Vorrichtung 1 "Warnung".
-- Wenn mindestens einer der betrachteten ersten (bzw. weiteren ersten) Zeitbereichs-Merkmals-Zustände des ersten (insbesondere unteren) Frequenzbands "erhöht" ist und mindestens einer der betrachteten zweiten (bzw. weiteren zweiten) Zeitbereichs-Merkmals-Zustände des zweiten (insbesondere oberen) Frequenzbands "erhöht" ist, ist der ermittelte Vorrichtungszustand 140 der Vorrichtung 1 "Warnung".
-- Wenn mindestens einer der betrachteten ersten (bzw. weiteren ersten) Zeitbereichs-Merkmals-Zustände des ersten (insbesondere unteren) Frequenzbands "hoch" ist und mindestens einer der betrachteten zweiten (bzw. weiteren zweiten) Zeitbereichs-Merkmals-Zustände des zweiten (insbesondere oberen) Frequenzbands "hoch" ist, ist der ermittelte Vorrichtungszustand 140 der Vorrichtung 1 "erhebliche Warnung" und/oder "Gefahr".
-- Wenn alle betrachteten Zeitbereichs-Merkmals-Zustände "normal" sind bzw. keine der obigen Bedingungen erfüllt ist, ist der ermittelte Vorrichtungszustand 140 der Vorrichtung 1 "o.k." und/oder "normal".
-- Wenn mehrere der obigen Bedingungen gleichzeitig erfüllt sind, ist der ermittelte Vorrichtungszustand 140 der Vorrichtung 1 der mit der höchsten Warnstufe, die sich aus den einzelnen Bedingungen ergibt.

Es ist möglich, dass in Abhängigkeit des ermittelten Vorrichtungszustands 140, insbesondere im Falle eines ermittelten Verdachts auf einen Fehler, einer Warnung und/oder einer ehrblichen Warnung, automatisiert eine Benachrichtigung an einen Nutzer erfolgt, sodass dieser Gegenmaßnahmen einleiten kann. Es ist alternativ oder zusätzlich denkbar, dass automatisiert in Abhängigkeit des ermittelten Vorrichtungszustands 140, insbesondere im Falle eines ermittelten Verdachts auf einen Fehler, einer Warnung und/oder einer ehrblichen Warnung, Gegenmaßnahmen eingeleitet werden, beispielsweise ein Abschalten der Vorrichtung 1.

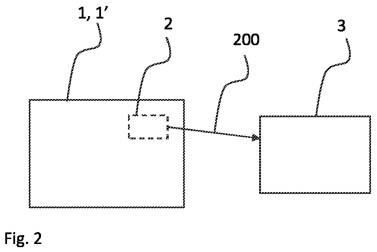

In Fig. 2 ist eine schematische Darstellung eines Systems gemäß einer Ausführungsform der vorliegenden Erfindung gezeigt. Ein Körperschallmesser 2 ist an einer Vorrichtung 1 mit einer drehbaren Komponente 1' angebracht und/oder angeordnet. Der Körperschallmesser 2 ist zur Detektion eines Körperschallsignals 200 ausgebildet. Das Körperschallsignal 200 wird einer Auswerteeinrichtung 3, insbesondere einem Computer, bereitgestellt, wobei die Auswerteeinrichtung 3 zur Ermittlung der Zeitbereichs-Merkmale F1L, ..., FnL, F1H, ..., FmH, Zeitbereichs-Merkmals-Zustände SF1L, ..., SFnL, SF1H, ..., SFmH und des Vorrichtungszustands 140 der Vorrichtung 1 eingerichtet ist. Insbesondere werden die Merkmalsextraktion 110, Merkmalszustandsbewertung 120 und/oder Vorrichtungszustandsbewertung 130 durch die Auswerteeinrichtung 3 durchgeführt. Es ist denkbar, dass die Auswerteeinrichtung 3 gemeinsam mit dem Körperschallmesser 2 verbaut ist oder separat von dem Körperschallmesser 2.

### Bezugszeichenliste

- 1: Vorrichtung
- 1': drehbare Komponente
- 2: Körperschallmesser
- 3: Auswerteeinrichtung
- 100: Datenaufnahme
- 110: Merkmalsextraktion
- 120: Merkmalszustandsbewertung
- 130: Vorrichtungszustandsbewertung
- 140: Vorrichtungszustand
- 200: Körperschallsignal
- F1L: erstes Zeitbereichs-Merkmal
- F2L, ..., FnL: weitere erste Zeitbereichs-Merkmale
- F1H: zweites Zeitbereichs-Merkmal
- F2H, ..., FmH: weitere zweite Zeitbereichs-Merkmale
- SF1L: erster Zeitbereichs-Merkmals-Zustand
- SF2L, ..., SFnL: weitere erste Zeitbereichs-Merkmals-Zustände
- SF1H: zweiter Zeitbereichs-Merkmals-Zustand
- SF2H, ..., SFmH: weitere zweite Zeitbereichs-Merkmals-Zustände

## Patentansprüche

1. Verfahren zur Überwachung eines Vorrichtungszustands einer Vorrichtung (1), insbesondere einer Vorrichtung (1) mit einer drehbaren Komponente (1'), wobei ein Körperschallsignal (200) der Vorrichtung (1) gemessen wird, **dadurch gekennzeichnet, dass** im Betrieb der Vorrichtung (1)
-- mindestens ein erstes Zeitbereichs-Merkmal (F1L) für ein erstes Frequenzband des Körperschallsignals (200) ermittelt wird und
-- mindestens ein zweites Zeitbereichs-Merkmal (F1H) für ein zweites Frequenzband des Körperschallsignals (200) ermittelt wird,
wobei das im Betrieb der Vorrichtung (1) ermittelte erste Zeitbereichs-Merkmal (F1L) des ersten Frequenzbands mit einem oberen und einem unteren ersten Schwellenwert verglichen wird, sodass ein erster Zeitbereichs-Merkmals-Zustand (SF1L) bestimmt wird, wobei das im Betrieb der Vorrichtung (1) ermittelte zweite Zeitbereichs-Merkmal (F1H) des zweiten Frequenzbands mit einem oberen und einem unteren zweiten Schwellenwert verglichen wird, sodass ein zweiter Zeitbereichs-Merkmals-Zustand (SF1H) bestimmt wird,
wobei zumindest in Abhängigkeit des ersten Zeitbereichs-Merkmals-Zustands (SF1L) und/oder des zweiten Zeitbereichs-Merkmals-Zustands (SF1H) ein Vorrichtungszustand (140) der Vorrichtung (1) bestimmt und/oder überprüft wird,
wobei der erste Zeitbereichs-Merkmals-Zustand (SF1L) einer von mindestens drei Kategorien zuordenbar ist, nämlich mindestens einer der Kategorien:
- "normal",
- "erhöht"
- "hoch",
wobei der ermittelte erste Zeitbereichs-Merkmals-Zustand (SF1L) "normal" ist, wenn das im Betrieb der Vorrichtung (1) ermittelte erste Zeitbereichs-Merkmal (F1L) des ersten Frequenzbands unterhalb des unteren und unterhalb des oberen ersten Schwellenwerts liegt,
- wobei der ermittelte erste Zeitbereichs-Merkmals-Zustand (SF1L) "erhöht" ist, wenn das im Betrieb der Vorrichtung (1) ermittelte erste Zeitbereichs-Merkmal (F1L) des ersten Frequenzbands oberhalb des unteren ersten Schwellenwerts und unterhalb des oberen ersten Schwellenwerts liegt,
- wobei der ermittelte erste Zeitbereichs-Merkmals-Zustand (SF1L) "hoch" ist, wenn das im Betrieb der Vorrichtung (1) ermittelte erste Zeitbereichs-Merkmal (F1L) des ersten Frequenzbands oberhalb des unteren ersten Schwellenwerts und oberhalb des oberen ersten Schwellenwerts liegt,
und/oder
wobei der zweite Zeitbereichs-Merkmals-Zustand (SF1H) einer von mindestens drei Kategorien zuordenbar ist, nämlich mindestens eine der folgenden Kategorien:
- "normal",
- "erhöht",
- "hoch",
wobei der ermittelte zweite Zeitbereichs-Merkmals-Zustand (SF1H) "normal" ist, wenn das im Betrieb der Vorrichtung (1) ermittelte zweite Zeitbereichs-Merkmal (S1H) des zweiten Frequenzbands unterhalb des unteren und unterhalb des oberen zweiten Schwellenwerts liegt,
- wobei der ermittelte zweite Zeitbereichs-Merkmals-Zustand (SF1H) "erhöht" ist, wenn das im Betrieb der Vorrichtung (1) ermittelte zweite Zeitbereichs-Merkmal (S1H) des zweiten Frequenzbands oberhalb des unteren zweiten Schwellenwerts und unterhalb des oberen zweiten Schwellenwerts liegt,
- wobei der ermittelte zweite Zeitbereichs-Merkmals-Zustand (SF1H) "hoch" ist, wenn das im Betrieb der Vorrichtung ermittelte zweite Zeitbereichs-Merkmal (S1H) des zweiten Frequenzbands oberhalb des unteren zweiten Schwellenwerts und oberhalb des oberen zweiten Schwellenwerts liegt,
**dadurch gekennzeichnet, dass**
ein Temperaturmesser vorgesehen ist, der zur Messung einer Temperatur der Vorrichtung (1) eingerichtet ist und die Temperatur der Vorrichtung (1) mit dem Temperaturmesser gemessen wird, wobei der Vorrichtungszustand der Vorrichtung (1) mindestens einer Kategorie "Verdacht auf Fehler" und/oder "vermuteter Fehler" zugeordnet wird, wenn die gemessene Temperatur oberhalb eines ersten Temperaturschwellenwertes liegt.

2. Verfahren nach Anspruch 1, wobei der Vorrichtungszustand der Vorrichtung (1) mindestens einer Kategorie "Warnung" zugeordnet wird, wenn die gemessene Temperatur oberhalb eines zweiten Temperaturschwellenwertes liegt, der größer ist als der erste Temperaturschwellenwert.

3. Verfahren nach einem der vorhergehenden Ansprüche, wobei im Betrieb der Vorrichtung (1)
-- ein oder mehrere weitere erste Zeitbereichs-Merkmale (F2L, ..., FnL) für das erste Frequenzband des Körperschallsignals (200) ermittelt werden und/oder
-- ein oder mehrere weitere zweite Zeitbereichs-Merkmale (F2H, ..., FmH) für das zweite Frequenzband des Körperschallsignals (200) ermittelt werden,
--- wobei das oder die im Betrieb der Vorrichtung (1) ermittelten weiteren ersten Zeitbereichs-Merkmale (F2L, ..., FnL) jeweils mit einem oberen und/oder einem unteren weiteren ersten Schwellenwert verglichen werden, sodass ein oder mehrere weitere erste Zeitbereichs-Merkmals-Zustände (SF2L, ..., SFnL) bestimmt werden, und/oder
--- wobei das oder die im Betrieb der Vorrichtung (1) ermittelten weiteren zweiten Zeitbereichs-Merkmale (F2H, ..., FmH) jeweils mit einem oberen und/oder einem unteren weiteren zweiten Schwellenwert verglichen werden, sodass ein oder mehrere weitere zweite Zeitbereichs-Merkmals-Zustände (SF2H, ..., SFmH) bestimmt werden, wobei der Vorrichtungszustand (140) der Vorrichtung (1) zusätzlich in Abhängigkeit des oder der weiteren ersten Zeitbereichs-Merkmals-Zustände (SF2L, ..., SFnL) und/oder des oder der weiteren zweiten Zeitbereichs-Merkmals-Zustände (F2H, ..., FmH) bestimmt und/oder überprüft wird.

4. Verfahren nach einem der vorhergehenden Ansprüche, wobei in einer Trainingsphase, in welcher sich die Vorrichtung (1) insbesondere in einem vorgegebenen Gut-Zustand und/oder Normalbetrieb befindet, das erste Zeitbereichs-Merkmal (F1L) des ersten Frequenzbands des Körperschallsignals (200) der Vorrichtung und das zweite Zeitbereichs-Merkmal (F1H) des zweiten Frequenzbands des Körperschallsignals (200) der Vorrichtung (1) bestimmt werden,
wobei mithilfe des in der Trainingsphase bestimmten ersten Zeitbereichs-Merkmals (F1L) des ersten Frequenzbands der obere und/oder der untere erste Schwellenwert betreffend das erste Zeitbereichs-Merkmal (F1L) bestimmt und insbesondere gespeichert werden, wobei mithilfe des in der Trainingsphase bestimmten zweiten Zeitbereichs-Merkmals (S1H) des zweiten Frequenzbands der obere und/oder der untere zweite Schwellenwert betreffend das zweite Zeitbereichs-Merkmal (F1H) bestimmt und insbesondere gespeichert werden.

5. Verfahren nach Anspruch 4, wobei in der Trainingsphase ein oder mehrere weitere erste Zeitbereichs-Merkmale (F2L, ..., FnL) des ersten Frequenzbands des Körperschallsignals (200) der Vorrichtung (1) und/oder ein oder mehrere weitere zweite Zeitbereichs-Merkmale (F2H, ..., FmH) des zweiten Frequenzbands des Körperschallsignals (200) der Vorrichtung (1) bestimmt werden,
wobei mithilfe des oder der in der Trainingsphase bestimmten weiteren ersten Zeitbereichs-Merkmale (F2L, ..., FnL) jeweils ein oberer und/oder jeweils ein unterer weiterer erster Schwellenwert, insbesondere für jedes der ersten Zeitbereichs-Merkmale (F2L, ..., FnL), bestimmt und insbesondere gespeichert werden,
wobei mithilfe des oder der in der Trainingsphase bestimmten weiteren zweiten Zeitbereichs-Merkmale (F2H, ..., FmH) jeweils ein oberer und/oder jeweils ein unterer weiterer zweiter Schwellenwert, insbesondere für jedes der zweiten Zeitbereichs-Merkmale (F2H, ..., FmH), bestimmt und insbesondere gespeichert werden.

6. Verfahren nach einem der vorhergehenden Ansprüche, wobei das erste Zeitbereichs-Merkmal (F1L) eines der folgenden Merkmale des Körperschallsignals (200) betreffend das erste Frequenzband ist:
-- mittlere quadratische Abweichung und/oder Standardabweichung,
-- Kurtosis,
-- Energie,
wobei insbesondere das oder die weiteren ersten Zeitbereichs-Merkmale (F2L, ..., FnL) jeweils eines der folgenden Merkmale des Körperschallsignals (200) betreffend das erste Frequenzband sind:
-- mittlere quadratische Abweichung und/oder Standardabweichung,
-- Kurtosis,
-- Energie.

7. Verfahren nach einem der vorhergehenden Ansprüche, wobei das zweite Zeitbereichs-Merkmal (F1H) eines der folgenden Merkmale des Körperschallsignals (200) betreffend das zweite Frequenzband ist:
-- mittlere quadratische Abweichung und/oder Standardabweichung,
-- Kurtosis,
-- Energie,
wobei insbesondere das oder die weiteren zweiten Zeitbereichs-Merkmale (F2H, ..., FmH) jeweils eines der folgenden Merkmale des Körperschallsignals (200) betreffend das zweite Frequenzband sind:
-- mittlere quadratische Abweichung und/oder Standardabweichung,
-- Kurtosis,
-- Energie.

8. Verfahren nach einem der vorhergehenden Ansprüche, wobei das Körperschallsignal (200) ein Zeitbereichs-Signal ist, wobei das Körperschallsignal (200) insbesondere eines oder mehrere der folgenden Signale umfasst:
-- Vibrations-Beschleunigungssignal,
-- Vibrations-Geschwindigkeitssignal,
-- Vibrations-Auslenkungssignal.

9. Verfahren nach einem der vorhergehenden Ansprüche, wobei das erste Frequenzband ein unteres Frequenzband des Körperschallsignals (200) ist und wobei das zweite Frequenzband ein oberes Frequenzband des Körperschallsignals (200) ist.

10. Verfahren nach einem der vorhergehenden Ansprüche, wobei der ermittelte Vorrichtungszustand (140) der Vorrichtung (1) aus den einzelnen betrachteten Zeitbereichs-Merkmals-Zuständen (SF1L, ..., SFnL, SF1H, ..., SFmH) derart ermittelt wird, dass:
-- (i) wenn mindestens einer der betrachteten Zeitbereichs-Merkmals-Zustände (SF1L, ..., SFnL, SF1H, ..., SFmH) "erhöht" ist, der ermittelte Vorrichtungszustand (140) der Vorrichtung (1) "Verdacht auf Fehler" und/oder "vermuteter Fehler" ist;
-- (ii) wenn mindestens einer der betrachteten Zeitbereichs-Merkmals-Zustände (SF1L, ..., SFnL, SF1H, ..., SFmH) "hoch" ist, der ermittelte Vorrichtungszustand (140) der Vorrichtung (1) "Warnung" ist;
-- (iii) wenn mindestens einer der betrachteten ersten und/oder weiteren ersten Zeitbereichs-Merkmals-Zustände (SF1L, ..., SFnL) des ersten Frequenzbands "erhöht" ist und mindestens einer der betrachteten zweiten und/oder weiteren zweiten Zeitbereichs-Merkmals-Zustände (SF1H, ..., SFmH) des zweiten Frequenzbands "erhöht" ist, der ermittelte Vorrichtungszustand (140) der Vorrichtung (1) "Warnung" ist;
-- (iv) wenn mindestens einer der betrachteten ersten und/oder weiteren ersten Zeitbereichs-Merkmals-Zustände (SF1L, ..., SFnL) des ersten Frequenzbands "hoch" ist und mindestens einer der betrachteten zweiten und/oder weiteren zweiten Zeitbereichs-Merkmals-Zustände (SF1H, ..., SFmH) des zweiten Frequenzbands "hoch" ist, der ermittelte Vorrichtungszustand (140) der Vorrichtung (1) "erhebliche Warnung" und/oder "Gefahr" ist;
-- (v) wenn alle betrachteten Zeitbereichs-Merkmals-Zustände (SF1L, ..., SFnL, SF1H, ..., SFmH) "normal" sind und/oder keine der vorhergehenden Bedingungen (i) bis (iv) erfüllt ist, der ermittelte Vorrichtungszustand (140) der Vorrichtung (1) "o.k." und/oder "normal" ist;
-- (vi) wenn mehrere der vorhergehenden Bedingungen (i) bis (v) gleichzeitig erfüllt sind, der ermittelte Vorrichtungszustand (140) der Vorrichtung (1) der Vorrichtungszustand (140) mit der höchsten Warnstufe ist, die sich aus den einzelnen Bedingungen (i) bis (v) ergibt.

11. System zur Überwachung eines Vorrichtungszustands einer Vorrichtung (1) mit einer drehbaren Komponente (1'), wobei das System geeignet ist, ein Verfahren nach einem der vorhergehenden Ansprüche durchzuführen, und einen Körperschallmesser (2) umfasst, der zur Messung eines Körperschallsignals (200) der Vorrichtung (1) eingerichtet ist, wobei
- dass das System derart eingerichtet ist, dass:
im Betrieb der Vorrichtung (1)
-- mindestes ein erstes Zeitbereichs-Merkmal (F1L) für ein erstes Frequenzband des Körperschallsignals (200) ermittelt wird und
-- mindestens ein zweites Zeitbereichs-Merkmal (F1H) für ein zweites Frequenzband des Körperschallsignals (200) ermittelt wird,
- wobei das System derart eingerichtet ist, dass:
-- das im Betrieb der Vorrichtung (1) ermittelte erste Zeitbereichs-Merkmal (F1L) des ersten Frequenzbands mit einem oberen und/oder einem unteren ersten Schwellenwert verglichen wird, sodass ein erster Zeitbereichs-Merkmals-Zustand (SF1L) bestimmt wird, und
-- das im Betrieb der Vorrichtung ermittelte zweite Zeitbereichs-Merkmal (F1H) des zweiten Frequenzbands mit einem oberen und/oder einem unteren zweiten Schwellenwert verglichen wird, sodass ein zweiter Zeitbereichs-Merkmals-Zustand (SF1H) bestimmt wird,
- wobei das System derart eingerichtet ist, dass zumindest in Abhängigkeit des ersten Zeitbereichs-Merkmals-Zustands (SF1L) und/oder des zweiten Zeitbereichs-Merkmals-Zustands (SF1H) ein Vorrichtungszustand (140) der Vorrichtung (1) bestimmt und/oder überprüft wird,
**dadurch gekennzeichnet, dass** das System einen Temperaturmesser umfasst, der zur Messung einer Temperatur der Vorrichtung (1) eingerichtet ist, wobei das System derart eingerichtet ist, dass der Vorrichtungszustand der Vorrichtung (1) mindestens einer Kategorie "Verdacht auf Fehler" und/oder "vermuteter Fehler" zugeordnet wird, wenn die gemessene Temperatur oberhalb eines ersten Temperaturschwellenwertes liegt.

## Claims

1. A method for monitoring the state of a device (1), in particular a device (1) with a rotatable component (1'), wherein a structure-borne sound signal (200) of the device (1) is measured, **characterised in that** during operation of the device (1)
-- at least one first time-domain characteristic (F1L) is determined for a first frequency band of the structure-borne sound signal (200), and
-- at least one second time-domain characteristic (F1H) is determined for a second frequency band of the structure-borne sound signal (200),
wherein the first time-domain characteristic (F1L) of the first frequency band determined during operation of the device (1) is compared with an upper and a lower first threshold value, such that a first time-domain characteristic state (SF1L) is determined, wherein the second time-domain characteristic (F1H) of the second frequency band determined during operation of the device (1) is compared with an upper and a lower second threshold value, such that a second time-domain characteristic state (SF1H) is determined,
wherein the state (140) of the device (1) is determined and/or checked at least as a function of the first time-domain characteristic state (SF1L) and/or the second time-domain characteristic state (SF1H),
wherein the first time-domain characteristic state (SF1L) can be assigned to one of at least three categories, namely at least one of the categories:
- "normal",
- "increased",
- "high",
wherein the determined first time-domain characteristic state (SF1L) is "normal" if the first time-domain characteristic (F1L) of the first frequency band determined during operation of the device (1) is below the lower and below the upper first threshold value,
- wherein the determined first time-domain characteristic state (SF1L) is "increased" if the first time-domain characteristic (F1L) of the first frequency band determined during operation of the device (1) is above the lower first threshold value and below the upper first threshold value,
- wherein the determined first time-domain characteristic state (SF1L) is "high" if the first time-domain characteristic (F1L) of the first frequency band determined during operation of the device (1) is above the lower first threshold value and above the upper first threshold value,
and/or
wherein the second time-domain characteristic state (SF1H) can be assigned to one of at least three categories, namely at least one of the following categories:
- "normal",
- "increased",
- "high",
wherein the determined second time-domain characteristic state (SF1H) is "normal" if the second time-domain characteristic (S1H) of the second frequency band determined during operation of the device (1) is below the lower and below the upper second threshold value,
- wherein the determined second time-domain characteristic state (SF1H) is "increased" if the second time-domain characteristic (S1H) of the second frequency band determined during operation of the device (1) is above the lower second threshold value and below the upper second threshold value,
- wherein the determined second time-domain characteristic state (SF1H) is "high" if the second time-domain characteristic (S1H) of the second frequency band determined during operation of the device is above the lower second threshold value and above the upper second threshold value,
**characterised in that**
a temperature gauge is provided, which is configured to measure a temperature of the device (1) and the temperature of the device (1) is measured with the temperature gauge, wherein the state of the device (1) is assigned to at least one category of "suspected fault" and/or "presumed fault" if the measured temperature is above a first temperature threshold value.

2. The method according to claim 1, wherein the state of the device (1) is assigned to at least one category of "warning" if the measured temperature is above a second temperature threshold value greater than the first temperature threshold value.

3. The method according to one of the preceding claims, wherein during operation of the device (1)
-- one or a plurality of further first time-domain characteristics (F2L, ..., FnL) are determined for the first frequency band of the structure-borne sound signal (200) and/or
-- one or a plurality of further second time-domain characteristics (F2H, ..., FmH) are determined for the second frequency band of the structure-borne sound signal (200),
--- wherein the further first time-domain characteristic(s) (F2L, ..., FnL) determined during operation of the device (1) are each compared with an upper and/or a lower further first threshold value, such that one or a plurality of further first time-domain characteristic states (SF2L, ..., SFnL) are determined, and/or
--- wherein the further second time-domain characteristic(s) (F2H, ..., FmH) determined during operation of the device (1) are each compared with an upper and/or a lower further second threshold value, such that one or a plurality of further second time-domain characteristic states (SF2H, ..., SFmH) are determined,
wherein the state (140) of the device (1) is additionally determined and/or checked as a function of the further first time-domain characteristic state(s) (SF2L, ..., SFnL) and/or the further second time-domain characteristic state(s) (F2H, ..., FmH).

4. The method according to one of the preceding claims, wherein, in a training phase in which the device (1) is in particular in a predetermined good state and/or normal operation, the first time-domain characteristic (F1L) of the first frequency band of the structure-borne sound signal (200) of the device and the second time-domain characteristic (F1H) of the second frequency band of the structure-borne sound signal (200) of the device (1) are determined,
wherein the first time-domain characteristic (F1L) of the first frequency band determined in the training phase is used to determine and in particular store the upper and/or the lower first threshold value relating to the first time-domain characteristic (F1L), wherein the second time-domain characteristic (S1H) of the second frequency band determined in the training phase is used to determine and in particular store the upper and/or the lower second threshold value relating to the second time-domain characteristic (F1H).

5. The method according to claim 4, wherein in the training phase one or a plurality of further first time-domain characteristics (F2L, ..., FnL) of the first frequency band of the structure-borne sound signal (200) of the device (1) and/or one or a plurality of further second time-domain characteristics (F2H, ..., FmH) of the second frequency band of the structure-borne sound signal (200) of the device (1) are determined,
wherein an upper and/or a lower further first threshold value, in particular for each of the first time-domain characteristics (F2L, ..., FnL), are determined and in particular stored with the aid of the further first time-domain characteristic(s) (F2L, ..., FnL) determined in the training phase,
wherein an upper and/or a lower further second threshold value, in particular for each of the second time-domain characteristics (F2H, ..., FmH), are determined and in particular stored with the aid of the further second time-domain characteristic(s) (F2H, ..., FmH) determined in the training phase.

6. The method according to one of the preceding claims, wherein the first time-domain characteristic (F1L) is one of the following characteristics of the structure-borne sound signal (200) relating to the first frequency band:
-- mean square deviation and/or standard deviation,
-- kurtosis,
-- energy,
wherein in particular the further first time-domain characteristic(s) (F2L, ..., FnL) are each one of the following features of the structure-borne sound signal (200) relating to the first frequency band:
-- mean square deviation and/or standard deviation,
-- kurtosis,
-- energy.

7. The method according to one of the preceding claims, wherein the second time-domain characteristic (F1H) is one of the following characteristics of the structure-borne sound signal (200) relating to the second frequency band:
-- mean square deviation and/or standard deviation,
-- kurtosis,
-- energy,
wherein in particular the further second time-domain characteristic(s) (F2H, ..., FmH) are each one of the following features of the structure-borne sound signal (200) relating to the second frequency band:
-- mean square deviation and/or standard deviation,
-- kurtosis,
-- energy.

8. The method according to one of the preceding claims, wherein the structure-borne sound signal (200) is a time-domain signal, wherein the structure-borne sound signal (200) comprises in particular one or a plurality of the following signals:
-- vibration acceleration signal,
-- vibration speed signal,
-- vibration deflection signal.

9. The method according to one of the preceding claims, wherein the first frequency band is a lower frequency band of the structure-borne sound signal (200) and wherein the second frequency band is an upper frequency band of the structure-borne sound signal (200).

10. The method according to one of the preceding claims, wherein the determined state (140) of the device (1) is determined from the individual considered time-domain characteristic states (SF1L, ..., SFnL, SF1H, ..., SFmH) such that:
-- (i) if at least one of the considered time-domain characteristic states (SF1L, ..., SFnL, SF1H, ..., SFmH) is "increased", the determined state (140) of the device (1) is "suspected fault" and/or "presumed fault";
-- (ii) if at least one of the considered time-domain characteristic states (SF1L, ..., SFnL, SF1H, ..., SFmH) is "high", the determined state (140) of the device (1) is "warning";
-- (iii) if at least one of the considered first and/or further first time-domain characteristic states (SF1L, ..., SFnL) of the first frequency band is "increased" and at least one of the considered second and/or further second time-domain characteristic states (SF1H, ..., SfmH) of the second frequency band is "increased" the determined state (140) of the device (1) is "warning";
-- (iv) if at least one of the considered first and/or further first time-domain characteristic states (SF1L, ..., SFnL) of the first frequency band is "high" and at least one of the considered second and/or further second time-domain characteristic states (SF1H, ..., SfmH) of the second frequency band is "high" the determined state (140) of the device (1) is "significant warning" and/or "danger";
-- (v) if all the considered time-domain characteristic states (SF1L, ..., SFnL, SF1H, ..., SFmH) are "normal" and/or none of the preceding conditions (i) to (iv) is fulfilled, the determined state (140) of the device (1) is "o.k." and/or "normal";
-- (vi) if a plurality of the preceding conditions (i) to (v) are simultaneously fulfilled, the determined state (140) of the device (1) is the state (140) with the highest warning level resulting from the individual conditions (i) to (v).

11. A system for monitoring the state of a device (1) with a rotatable component (1'), wherein the system is suitable for performing a method according to one of the preceding claims, and comprises a structure-borne sound sensor (2) configured to measure a structure-borne sound signal (200) of the device (1), wherein
- the system is configured such that:
during operation of the device (1)
-- at least one first time-domain characteristic (F1L) is determined for a first frequency band of the structure-borne sound signal (200), and
-- at least one second time-domain characteristic (F1H) is determined for a second frequency band of the structure-borne sound signal (200),
- wherein the system is configured such that:
-- the first time-domain characteristic (F1L) of the first frequency band determined during operation of the device (1) is compared with an upper and/or a lower first threshold value, such that a first time-domain characteristic state (SF1L) is determined, and
-- the second time-domain characteristic (F1H) of the second frequency band determined during operation of the device is compared with an upper and/or a lower second threshold value, such that a second time-domain characteristic state (SF1H) is determined,
- wherein the system is configured such that the state (140) of the device (1) is determined and/or checked at least as a function of the first time-domain characteristic state (SF1L) and/or the second time-domain characteristic state (SF1H),
**characterised in that** the system comprises a temperature gauge, which is configured to measure a temperature of the device (1), wherein the system is configured such that the state of the device (1) is assigned to at least one category of "suspected fault" and/or "presumed fault" if the measured temperature is above a first temperature threshold value.

## Revendications

1. Procédé de surveillance d'un état de dispositif d'un dispositif (1), en particulier d'un dispositif (1) doté d'un composant rotatif (1'), un signal de bruit de structure (200) du dispositif (1) étant mesuré, **caractérisé en ce que**, lorsque le dispositif (1) fonctionne
-- au moins une première caractéristique de domaine temporel (F1L) est déterminée pour une première bande de fréquences du signal de bruit de structure (200) et
-- au moins une seconde caractéristique de domaine temporel (F1H) est déterminée pour une seconde bande de fréquences du signal de bruit de structure (200),
la première caractéristique de domaine temporel (F1L) de la première bande de fréquences, déterminée lorsque le dispositif (1) fonctionne, étant comparée à une première valeur seuil supérieure et à une première valeur seuil inférieure, de sorte qu'un premier état de caractéristique de domaine temporel (SF1L) est déterminé, la seconde caractéristique de domaine temporel (F1H) de la seconde bande de fréquences, déterminée lorsque le dispositif (1) fonctionne, étant comparée à une seconde valeur seuil supérieure et à une seconde valeur seuil inférieure, de sorte qu'un second état de caractéristique de domaine temporel (SF1H) est déterminé,
un état de dispositif (140) du dispositif (1) étant déterminé et/ou contrôlé au moins en fonction du premier état de caractéristique de domaine temporel (SF1L) et/ou du second état de caractéristique de domaine temporel (SF1H),
le premier état de caractéristique de domaine temporel (SF1L) pouvant être attribué à l'une d'au moins trois catégories, à savoir à au moins l'une des catégories :
- « normal »,
- « augmenté »
- « élevé »,
le premier état de caractéristique de domaine temporel (SF1L) déterminé étant « normal » lorsque la première caractéristique de domaine temporel (F1L) de la première bande de fréquences, déterminée lorsque le dispositif (1) fonctionne, est inférieure à la première valeur seuil inférieure et inférieure à la première valeur seuil supérieure,
- le premier état de caractéristique de domaine temporel (SF1L) déterminé étant « augmenté » lorsque la première caractéristique de domaine temporel (F1L) de la première bande de fréquences, déterminée lorsque le dispositif (1) fonctionne, est supérieure à la première valeur seuil inférieure et inférieure à la première valeur seuil supérieure,
- le premier état de caractéristique de domaine temporel (SF1L) déterminé étant « élevé » lorsque la première caractéristique de domaine temporel (F1L) de la première bande de fréquences, déterminée lorsque le dispositif (1) fonctionne, est supérieure à la première valeur seuil inférieure et supérieure à la première valeur seuil supérieure,
et/ou
le second état de caractéristique de domaine temporel (SF1H) pouvant être attribué à l'une d'au moins trois catégories, à savoir au moins l'une des catégories suivantes :
- « normal »,
- « augmenté »,
- « élevé »,
le second état de caractéristique de domaine temporel (SF1H) déterminé étant « normal » lorsque la seconde caractéristique de domaine temporel (S1H) de la seconde bande de fréquences, déterminée lorsque le dispositif (1) fonctionne, est inférieure à la seconde valeur seuil inférieure et inférieure à la seconde valeur seuil supérieure,
- le second état de caractéristique de domaine temporel déterminé (SF1H) étant « augmenté » lorsque la seconde caractéristique de domaine temporel (S1H) de la seconde bande de fréquences, déterminée lorsque le dispositif (1) fonctionne, est supérieure à la seconde valeur seuil inférieure et inférieure à la seconde valeur seuil supérieure,
- le second état de caractéristique de domaine temporel (SF1H) déterminé étant « élevé » lorsque la seconde caractéristique de domaine temporel (S1H) de la seconde bande de fréquences, déterminée lorsque le dispositif fonctionne, est supérieure à la seconde valeur seuil inférieure et supérieure à la seconde valeur seuil supérieure,
**caractérisé en ce que**
un capteur de température est prévu, qui est agencé pour mesurer une température du dispositif (1) et la température du dispositif (1) est mesurée avec le capteur de température, l'état du dispositif (1) étant attribué à au moins une catégorie « défaut suspecté » et/ou « défaut présumé » lorsque la température mesurée est supérieure à une première valeur seuil de température.

2. Procédé selon la revendication 1, dans lequel l'état du dispositif (1) est attribué à au moins une catégorie « avertissement » lorsque la température mesurée est supérieure à une seconde valeur seuil de température qui est supérieure à la première valeur seuil de température.

3. Procédé selon l'une quelconque des revendications précédentes, dans lequel, lorsque le dispositif (1) fonctionne
-- une ou plusieurs autres premières caractéristiques de domaine temporel (F2L, ..., FnL) sont déterminées pour la première bande de fréquences du signal de bruit de structure (200) et/ou
-- une ou plusieurs autres secondes caractéristiques de domaine temporel (F2H, ..., FmH) sont déterminées pour la seconde bande de fréquences du signal de bruit de structure (200),
--- la ou les autres premières caractéristiques de domaine temporel (F2L, ..., FnL) déterminées, lorsque le dispositif (1) fonctionne, étant respectivement comparées à une première valeur seuil supérieure et/ou à une première valeur seuil inférieure, de sorte qu'un ou plusieurs autres premiers états de caractéristiques de domaine temporel (SF2L, ..., SFnL) sont déterminés, et/ou
--- la ou les autres secondes caractéristiques de domaine temporel (F2H, ..., FmH) déterminées, lorsque le dispositif (1) fonctionne, étant respectivement comparées à une seconde valeur seuil supérieure et/ou à une seconde valeur seuil inférieure, de sorte qu'un ou plusieurs autres seconds états de caractéristique de domaine temporel (SF2H, ..., SFmH) sont déterminés,
l'état de dispositif (140) du dispositif (1) étant en outre déterminé et/ou contrôlé en fonction du ou des autres premiers états de caractéristiques de domaine temporel (SF2L, ..., SFnL) et/ou du ou des autres seconds états de caractéristique de domaine temporel (F2H, ..., FmH).

4. Procédé selon l'une quelconque des revendications précédentes, dans une phase d'entraînement dans laquelle le dispositif (1) se trouve notamment dans un bon état prédéterminé et/ou en fonctionnement normal, la première caractéristique de domaine temporel (F1L) de la première bande de fréquences du signal de bruit de structure (200) du dispositif et la seconde caractéristique de domaine temporel (F1H) de la seconde bande de fréquences du signal de bruit de structure (200) du dispositif (1) étant déterminées,
à l'aide de la première caractéristique de domaine temporel (F1L) de la première bande de fréquences déterminée dans la phase d'entraînement, la première valeur seuil supérieure et/ou la première valeur seuil inférieure concernant la première caractéristique de domaine temporel (F1L) étant déterminées et en particulier mémorisées, à l'aide de la seconde caractéristique de domaine temporel (S1H) de la seconde bande de fréquences déterminée dans la phase d'entraînement, la seconde valeur seuil supérieure et/ou la seconde valeur seuil inférieure concernant la seconde caractéristique de domaine temporel (F1H) étant déterminées et en particulier mémorisées.

5. Procédé selon la revendication 4, lors de la phase d'entraînement, une ou plusieurs autres premières caractéristiques de domaine temporel (F2L, ..., FnL) de la première bande de fréquences du signal de bruit de structure (200) du dispositif (1) et/ou une ou plusieurs autres secondes caractéristiques de domaine temporel (F2H, ..., FmH) de la seconde bande de fréquences du signal de bruit de structure (200) du dispositif (1) étant déterminées,
respectivement une autre première valeur seuil supérieure et/ou une autre première valeur seuil inférieure, en particulier pour chacune des premières caractéristiques de domaine temporel (F2L, ..., FnL), étant déterminées et en particulier mémorisées à l'aide de la ou des autres premières caractéristiques de domaine temporel (F2L, ..., FnL) déterminées dans la phase d'entraînement,
à l'aide de la ou des autres secondes caractéristiques de domaine temporel (F2H, ..., FmH) déterminées dans la phase d'entraînement, une autre seconde valeur seuil supérieure et/ou une autre seconde valeur seuil inférieure étant déterminées, et en particulier mémorisées, en particulier pour chacune des secondes caractéristiques de domaine temporel (F2H, ..., FmH).

6. Procédé selon l'une quelconque des revendications précédentes, la première caractéristique de domaine temporel (F1L) étant l'une des caractéristiques suivantes du signal de bruit de structure (200) concernant la première bande de fréquences :
-- écart quadratique moyen et/ou écart type,
-- kurtosis,
-- énergie,
en particulier, la ou les autres premières caractéristiques de domaine temporel (F2L, ..., FnL) étant respectivement l'une des caractéristiques suivantes du signal de bruit de structure (200) concernant la première bande de fréquences :
-- écart quadratique moyen et/ou écart type,
-- kurtosis,
-- énergie.

7. Procédé selon l'une quelconque des revendications précédentes, la seconde caractéristique de domaine temporel (F1H) étant l'une des caractéristiques suivantes du signal de bruit de structure (200) concernant la seconde bande de fréquences :
-- écart quadratique moyen et/ou écart type,
-- kurtosis,
-- énergie,
en particulier, la ou les autres secondes caractéristiques de domaine temporel (F2H, ..., FmH) étant respectivement l'une des caractéristiques suivantes du signal de bruit de structure (200) concernant la seconde bande de fréquences :
-- écart quadratique moyen et/ou écart type,
-- kurtosis,
-- énergie.

8. Procédé selon l'une quelconque des revendications précédentes, le signal de bruit de structure (200) étant un signal de domaine temporel, le signal de bruit de structure (200) comprenant en particulier un ou plusieurs des signaux suivants :
-- signal d'accélération des vibrations,
-- signal de vitesse des vibrations,
-- signal de déviation des vibrations.

9. Procédé selon l'une quelconque des revendications précédentes, la première bande de fréquences étant une bande de fréquences inférieure du signal de bruit de structure (200) et la seconde bande de fréquences étant une bande de fréquences supérieure du signal de bruit de structure (200).

10. Procédé selon l'une quelconque des revendications précédentes, dans lequel l'état de dispositif (140) déterminé du dispositif (1) est déterminé à partir des différents états de caractéristiques de domaine temporel (SF1L, ..., SFnL, SF1H, ..., SFmH) considérés, de sorte que :
-- (i) si au moins l'un des états de caractéristiques de domaine temporel (SF1L, ..., SFnL, SF1H, ..., SFmH) considérés est « augmenté », l'état de dispositif (140) déterminé du dispositif (1) est « défaut suspecté » et/ou « défaut présumé » ;
-- (ii) si au moins l'un des états de caractéristique de domaine temporel (SF1L, ..., SFnL, SF1H, ..., SFmH) considérés est « élevé », l'état de dispositif (140) déterminé du dispositif (1) est « avertissement » ;
-- (iii) si au moins l'un des premiers états caractéristiques de domaine temporel considérés et/ou des autres premiers états caractéristiques de domaine temporel (SF1L, ..., SFnL) de la première bande de fréquences est « augmenté » et si au moins l'un des seconds états caractéristiques de domaine temporel considérés et/ou des autres seconds états caractéristiques de domaine temporel (SF1H, ..., SFmH) de la seconde bande de fréquences est « augmenté », l'état de dispositif (140) déterminé du dispositif (1) est « avertissement » ;
-- (iv) si au moins l'un des premiers états caractéristiques de domaine temporel considérés et/ou des autres premiers états caractéristiques de domaine temporel (SF1L, ..., SFnL) de la première bande de fréquences est « élevé » et si au moins l'un des seconds états caractéristiques de domaine temporel considérés et/ou des autres seconds états caractéristiques de domaine temporel (SF1H, ..., SFmH) de la seconde bande de fréquences est « élevé », l'état de dispositif (140) déterminé du dispositif (1) est « avertissement important » et/ou « danger » ;
-- (v) si tous les états de caractéristiques de domaine temporel (SF1L, ..., SFnL, SF1H, ..., SFmH) considérés sont « normaux » et/ou si aucune des conditions précédentes (i) à (iv) n'est remplie, l'état de dispositif (140) déterminé du dispositif (1) est « o.k. » et/ou « normal » ;
-- (vi) si plusieurs des conditions (i) à (v) précédentes sont remplies simultanément, l'état de dispositif (140) déterminé du dispositif (1) est l'état de dispositif (140) présentant le niveau d'avertissement le plus élevé résultant des conditions (i) à (v) individuelles.

11. Système de surveillance d'un état de dispositif d'un dispositif (1) doté d'un composant rotatif (1'), le système étant adapté pour mettre en œuvre un procédé selon l'une quelconque des revendications précédentes et comprenant un sonomètre de structure (2) adapté pour mesurer un signal de bruit de structure (200) du dispositif (1),
- le système étant agencé de sorte que :
lorsque le dispositif (1) fonctionne
-- au moins une première caractéristique de domaine temporel (F1L) est déterminée pour une première bande de fréquences du signal de bruit de structure (200) et
-- au moins une seconde caractéristique de domaine temporel (F1H) est déterminée pour une seconde bande de fréquences du signal de bruit de structure (200),
- le système étant agencé de sorte que :
-- la première caractéristique de domaine temporel (F1L) de la première bande de fréquences, déterminée lorsque le dispositif (1) fonctionne, est comparée à une première valeur seuil supérieure et/ou une première valeur seuil inférieure, de sorte qu'un premier état de caractéristique de domaine temporel (SF1L) est déterminé, et
-- la seconde caractéristique de domaine temporel (F1H) de la seconde bande de fréquences, déterminée lorsque le dispositif fonctionne, est comparée à une seconde valeur seuil supérieure et/ou une seconde valeur seuil inférieure, de sorte qu'un second état de caractéristique de domaine temporel (SF1H) est déterminé,
- le système étant agencé de sorte qu'un état de dispositif (140) du dispositif (1) est déterminé et/ou contrôlé au moins en fonction du premier état de caractéristique de domaine temporel (SF1L) et/ou du second état de caractéristique de domaine temporel (SF1H),
**caractérisé en ce que** le système comprend un capteur de température agencé pour mesurer une température du dispositif (1), le système étant agencé de sorte que l'état de dispositif du dispositif (1) est attribué à au moins une catégorie « défaut suspecté » et/ou « défaut présumé » si la température mesurée est supérieure à une première valeur seuil de température.
